# EUROPEAN PATENT APPLICATION

(11) **EP 3 035 217 A1**
(43) Date of publication of application: **22.06.2016**
(21) Application number: 15200754.8
(22) Date of filing: 17.12.2015
(51) Int. Cl.: G06F 17/30

(54) **COMPUTER-READABLE STORAGE MEDIUM AND METHOD FOR CROSS-PLATFORM SYNCHRONIZING ATTRIBUTES OF FILES**

(30) Priority: 18.12.2014 TW 103144373
(71) Applicant: Synology Incorporated, Taipei 103 (TW)
(72) Inventor: Chu, Bie-I, 320 Taoyuan City (TW); Wu, Yi-Chi, 880 Penghu County (TW); Kuo, Ching-Hua, 814 Kaohsiung City (TW); Yu, Chieh, 407 Taichung City (TW)
(74) Representative: Straus, Alexander

(57) **Abstract**

A method for cross-platform synchronizing attributes of files is provided. According to the method, a file attribute structure adopted by a first file system of a first computer system is expanded from a first file attribute structure to an integrated file attribute structure. Data of attributes of files of the first computer system under the integrated file attribute structure are gathered and uploaded to a server. A second computer system updates attributes of files of a second file system of the second computer system based on the data of the attributes of the first computer system, which is received from the server.

## Description

### Field of the Invention

The present invention relates to a computer-readable storage medium and a method for synchronizing attributes of files, and more specifically to a computer-readable storage medium and a method for cross-platform synchronizing attributes of files.

### Background of the Invention

In view of attributes of files and directories, an operating system and a file system thereof usually provides the functions for recording some basic attributes of files. The attributes of the files may include the owner(s) of the files, the created times, the last modified times, read-only or not, etc. Based the definition of attributes of files, an attribute of files most used in OS X Mavericks® operating system of Apple® Inc. is "tag". In an environment of OS X Mavericks® of Apple® Inc., a user may use Finder (i.e. a file management program) to define names and colors of tags and open a shortcut menu by right-clicking to manage the attributes of the files.

However, other operating systems in the mainstream, such as Windows®, Ubuntu®, Android®, etc., do not support the "tag" function of OS X Mavericks® to organize the files. Therefore, information of tags of files created in OS X Mavericks® may disappear after a cross-platform synchronization of the files even though the tags may be created by the user. As a result, the information of the tags of the files may not be displayed or used in other platforms.

### Summary of the Invention

This in mind, the present invention aims at providing a method for cross-platform synchronizing attributes of files.

This is achieved by a method according to the independent claims. The dependent claims pertain to corresponding further developments and improvements.

An embodiment of the present invention presents a method for cross-platform synchronizing attributes of files. The method is applied in a first computer system and comprises: expanding a first file attribute structure adopted by a first file system of the first computer system to an integrated file attribute structure; and synchronizing data of attributes of files of the first computer system under the integrated file attribute structure to a server to allow the server to synchronize the data of the attributes of the files of the first computer system under the integrated file attribute structure to a second computer system, such that the second computer system updates data of attributes of files of the second computer system under a second file attribute structure according to the received data of the attributes of the files of the first computer system under the integrated file attribute structure.

An embodiment of the present invention presents a non-transient computer-readable storage medium. The storage medium stores a computer program which contains a plurality of computer-executable instructions that are configured to command a computer system to perform the foresaid method for cross-platform synchronizing attributes of files.

According to the method for cross-platform synchronizing attributes of files of the present invention, not only the "tag" function and information thereof in OS X Mavericks® operating system may be transferred to other operating systems, but also a function of cross-platform synchronizing attributes of files may be achieved.

### Brief Description of the Drawings

In the following, the invention is further illustrated by way of example, taking reference to the accompanying drawings thereof:
FIG. 1 is a functional block diagram of a file-attribute synchronization system configured to perform a method for cross-platform synchronizing attributes of files according to an embodiment of the present invention,
FIG. 2 illustrates a plurality of sets consist of attributes of a first file attribute structure, a second file attribute structure, a third file attribute structure and an integrated file attribute structure shown in FIG. 1, and
FIG. 3 is a flow chart of a method for cross-platform synchronizing attributes of files according to an embodiment of the present invention.

### Detailed Description

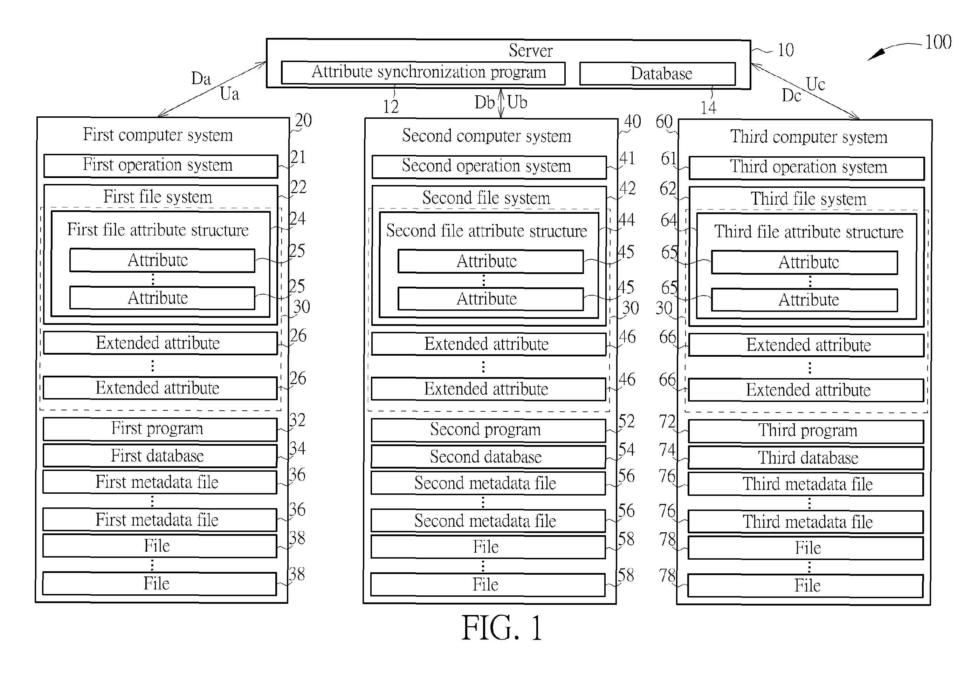

FIG. 1 is a functional block diagram of a file-attribute synchronization system 100 configured to perform a method for cross-platform synchronizing attributes of files according to an embodiment of the present invention. The file-attribute synchronization system 100 comprises the server 10, the first computer system 20 and the second computer system 40. Each of the first computer system 20 and the second computer system 40 establishes a network connection with the server 10 so as to transmit and receive data to/from the server 10 through the network connection. A first operating system 21 and a second operating system 41 are installed in the first computer system 20 and the second computer system 40 respectively. In the embodiment, the first operating system 21 may be OS X Mavericks® operating system, and the second operating system 41 may be Windows® 7 operating system of Microsoft®. However, the present invention is not limited thereto. The first operating system 21 and/or the second operating system 41 may be operating systems, such as Ubuntu®, Android®, etc.

The first operating system 21 uses a first file system 22 to manage files 38 of the first computer system 20, and the second operating system 41 uses a second file system 42 to manage files58 of the second computer system 40. Moreover, a file attribute structure of the first file system 22 is a first file attribute structure 24, and a file attribute structure of the second file system 42 is a second file attribute structure 44. Where, the first file attribute structure 24 has a plurality of attributes 25, and the second file attribute structure 44 has a plurality of attributes 45. In a condition that the first operating system 21 uses the first file system 22, each of the files 38 of the first computer system 20 has a plurality of attributes 25 of the first file attribute structure 24. Similarly, in a condition that the second operating system 41 uses the second file system 42, each of the files 58 of the second computer system 40 has a plurality of attributes 45 of the second file attribute structure 44. In the embodiment, the plurality of attributes 25 of the first file attribute structure 24 are not all the same as the plurality of attributes 45 of the second file attribute structure 44. In other words, the attributes 25 of the first file attribute structure 24 and the attributes 45 of the second file attribute structure 44 may be partially equal (e.g. file name, file extension) and partially different (e.g. tag).

In order to cross-platform synchronize the attributes of files, a file attribute structure adopted by the first file system 22 of the first computer system 20 is expanded from the first file attribute structure 24 to an integrated file attribute structure 30. Afterward, data Ua of the attributes of the files 38 of the first computer system 20 under the integrated file attribute structure 30 may be collected and transmitted to the server 10. Accordingly, when synchronizing the attributes of the files 58 of the second computer system 40 with the attributes of the files 38 of the first computer system 20, the second computer system 40 may receive the data Ua of the first computer system 20 from the server 10 and update the data of attributes of the files 58 of the second file system 42 under the second file attribute structure 44 according to the data Ua received from the server 10. Relatively, once the data of attributes of the files 58 under the second file attribute structure 44 is modified, the modified data of attributes of the files 58 may be synchronized through the server 10 to the first computer system 20, such that the first computer system 20 may update the data of attributes of the files 38 under the integrated file attribute structure 30 according to the modified data of the attributes of the files 58 under the second file attribute structure 44.

In an embodiment of the present invention, a file attribute structure adopted by the second computer system 40 may be expanded from the second file attribute structure 44 to the integrated file attribute structure 30. Data Ub of the attributes of the files 58 of the second computer system 40 under the integrated file attribute structure 30 may be collected and transmitted to the server 10. Afterward, the first computer system 20 may receive the data Ub of the second computer system 40 from the server 10 and update the data of attributes of the files 38 of the first file system 22 under the first file attribute structure 24 according to the data Ub received from the server 10. In the embodiment, when the file attribute structure adopted by the second computer system 40 is expanded from the second file attribute structure 44 to the integrated file attribute structure 30, the data of the attributes of the files 58 of the second file system 42 of the second computer system 40 under the integrated file attribute structure 30 may be updated according to the data of the attributes of the files 38 received from the first computer system 20 via the server 10.

In an embodiment of the present invention, in order to make the first file system 22 of the first computer system 20 be able to distinguish and use the attributes of the files of the second computer system 40, the first program 32 may be installed in the first computer system 20, such that the file attribute structure of the first computer system 20 would be expanded from the first file attribute structure 24 to the integrated file attribute structure 30. The first program 32 may be integrated in a default file management program of the first operating system 21 (e.g. Finder of S X Mavericks® operating system of Apple® Inc., File Manager of Microsoft® Windows 7, etc.) or other third-party file management programs in a manner of plugin, API (Application Programming Interface) injection, or others. In the embodiment, the integrated file attribute structure 30 comprises not only the plurality of attributes 25 of the first file attribute structure 24 but also a plurality of extended attributes 26. Where, the attributes that are included by the second file attribute structure 44 but not included by the first file attribute structure 24 would be defined by the extended attributes 26, such that these attributes (i.e. the extended attributes 26) could be distinguished and used in the first computer system 20. Moreover, the extended attributes 26 are different from each other and different from each of the attributes 25. In other words, the attributes 25 and the extended attributes 26 included in the integrated file attribute structure 30 are not repeated. In addition, the attributes 25 and the extended attributes 26 of the integrated file attribute structure 30 may include but not limited thereto file name, file extension, limits of authority, color, tag, comment, discussion thread, category, established date, icon, etc. In the embodiment, the first program 32 may find out the plurality of attributes 25 included in the first file attribute structure 24 according to the first file system 22 and/or the first operating system 21 adopted by the first computer system 20, such that the first program 32 may determine to expand the first file attribute structure 24 to the integrated file attribute structure 30 having the needed extended attributes 26.

In an embodiment of the present invention, in order to make the second file system 42 of the second computer system 40 be able to distinguish and use the attributes of the files 38 of the first computer system 20, the second program 52 may be installed in the second computer system 40, such that the file attribute structure of the second computer system 40 would be expanded from the second file attribute structure 44 to the integrated file attribute structure 30. The second program 52 may be integrated in the default file management program of the second operating system 41 or other third-party file management programs in a manner of plugin, API (Application Programming Interface) injection, or others. Since the first program 32 and the second program 52 may operate under the default file management programs of the first operating system 21 and the second operating system 41 respectively in a manner of plugin, it may provide the users with seamless and straight-forward customer experience. Moreover, the integrated file attribute structure 30 comprises not only the plurality of attributes 45 of the second file attribute structure 44 but also a plurality of extended attributes 46. Where, the attributes that are included by the first file attribute structure 24 but not included by the second file attribute structure 44 would be defined by the extended attributes 46, such that these attributes (i.e. extended attributes 46) could be distinguished and used in the second computer system 40. Moreover, the extended attributes 46 are different from each other and different from each of the attributes 45. In other words, the attributes 45 and the extended attributes 46 included in the integrated file attribute structure 30 are not repeated. In addition, the attributes 45 and the extended attributes 46 of the integrated file attribute structure 30 may include but not limited thereto file name, file extension, limits of authority, color, tag, comment, discussion thread, category, established date, icon, etc. In the embodiment, the second program 52 may find out the plurality of attributes 45 included in the second file attribute structure 44 according to the second file system 42 and/or the second operating system 41 adopted by the second computer system 40, such that the second program 52 may determine to expand the second file attribute structure 44 to the integrated file attribute structure 30 having the needed extended attributes 26.

In an embodiment of the present invention, the first program 32 may obtain the built-in attributes of the files 38 under the first file system 22 via the first operating system 21. In other words, the first program 32 may obtain the plurality of attributes 25 of the files 38 under first file attribute structure 24 via the first operating system 21. Similarly, the second program 52 may obtain the built-in attributes of the files 58 under the second file system 42 via the second operating system 41. In other words, the second program 52 may obtain the plurality of attributes 45 of the files 58 under second file attribute structure 44 via the second operating system 41. Take Windows® operating system of Microsoft® for example, the first program 32 and the second program 52 may obtain the built-in attributes of the files by using SystemCall (e.g. ReadDirectoryChanges) of Windows®. Take Linus operating system for example, the first program 32 and the second program 52 may obtain the built-in attributes of the files by using Kernel function (e.g. Inotify) of Linus. Take iOS® operating system for example, the first program 32 and the second program 52 may obtain the built-in attributes of the files by using application program interface (API) (e.g. FSEvents) of iOS®. The details of obtaining the built-in attributes of files have been taught in various solutions in the related art and thus would not be repeated herein.

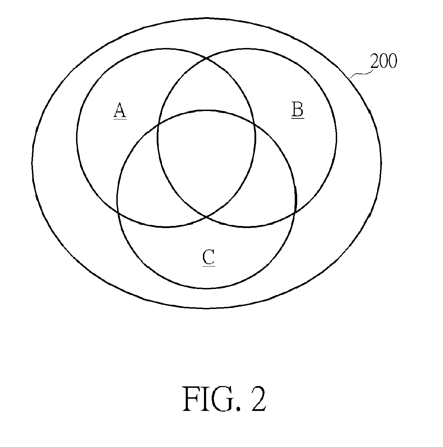

In an embodiment of the present invention, the integrated file attribute structure 30 which consists of the plurality of attributes 25 of the first file attribute structure 24 and the plurality of extended attributes 26 is equal to the integrated file attribute structure 30 which consists of the plurality of attributes 45 of the second file attribute structure 44 and the plurality of extended attributes 46. IG. 2 illustrates a plurality of sets being composed of the attributes of the first file attribute structure 24, the second file attribute structure 44 and the integrated file attribute structure 30. Wherein, a set 200 is a set composed of all of the attributes of the integrated file attribute structure 30, a first attributes set A is a set composed of all of the attributes 25 of the first file attribute structure 24, and a second attributes set B is a set composed of all of the attributes 45 of the second file attribute structure 44. As shown in FIG. 2, the first attributes set A composed of all attributes 25 of the first file attribute structure 24 is included in the set 200 composed of all attributes of the integrated file attribute structure 30. The second attributes set B composed of all attributes 45 of the second file attribute structure 44 is included in the set 200 composed of all attributes of the integrated file attribute structure 30. In the embodiment, the union of the first attributes set A and the second attributes set B is less than the set 200. However, in other embodiment of the present invention, the structure of the file attributes may be designed to let the set 200 be equal to the union of the first attributes set A and the second attributes set B.

In an embodiment of the present invention, when the first file system 22 uses the integrated file attribute structure 30 to record the attributes of each of the files 38, the attributes 25 of each file 38 belonged to the first file attribute structure 24 are recorded by the first file system 22 even if the first program 32 may not been installed. In addition, data of the extended attributes 26 of each file 38 which is not belonged to the first file attribute structure 24 may be stored in a first metadata file 36 and/or a first database 34. In other words, if any attribute of the files 38 is supported by the first file system 22 of the first operating system 21, the data of this attribute would not be stored in the first metadata file 36 and/or the first database 34. On the contrary, if any attribute of the files 38 is not supported by the first file system 22 of the first operating system 21, the data of the attribute would be stored in the first metadata file 36 and/or the first database 34. In other embodiments of the present invention, all of the attributes of each of the files 38 may be stored in at least a first metadata file 36 and/or the first database 34.

Similarly, when the second file system 42 uses the integrated file attribute structure 30 to record the attributes of each of the files 58, the attributes 45 of each file 58 belonged to the second file attribute structure 44 are recorded by the second file system 42 even if the second program 52 may not been installed. In addition, data of the extended attributes 46 of each file 58 which is not belonged to the second file attribute structure 44 may be stored in a second metadata file 56 and/or a second database 54. In other words, if any attribute of the files 58 is supported by the second file system 42 of the second operating system 41, the data of this attribute would not be stored in the second metadata file 56 and/or the second database 54. On the contrary, if any attribute of the files 58 is not supported by the second file system 42 of the second operating system 41, the data of the attribute would be stored in the second metadata file 56 and/or the second database 54. In other embodiments of the present invention, all of the attributes of each of the files 58 may be stored in at least a second metadata file 56 and/or the second database 54.

In an embodiment of the present invention, when synchronization of attributes of files between the first computer system 20 and the second computer system 40 is performed, the first computer system 20 gathers the data Ua of the attributes of the files 38 under the integrated file attribute structure 30 via the first program 32 and the first file system 22 and uploads the gathered data Ua of the attributes of the files 38 under the integrated file attribute structure 30 to the server 10, while the second computer system 40 gathers the data Ub of the attributes of the files 58 under the integrated file attribute structure 30 via the second program 52 and the second file system 42 and uploads the gathered data Ub of the attributes of the files 58 under the integrated file attribute structure 30 to the server 10. Then, the server 10 may synchronize the data of the attributes of the files 38 and 58 of the first computer system 20 and the second computer system 40 under the integrated file attribute structure 30 according to the data Ua and Ub of the attributes received from the first computer system 20 and the second computer system 40. In detail, an attribute synchronization program 12 of the server 10 stores the uploaded data Ua and Ub of the attributes of the first computer system 20 and the second computer system 40 in a database 14 of the server 10. Afterwards, when synchronizing the attributes of the files, the attribute synchronization program 12 reads data Da and Db of the attributes, which is necessary for synchronizing the attributes, and transmits the data Da and Db of the attributes to the first computer system 20 and the second computer system 40 respectively. Then, the first program 32 and the first file system 22 may update related attributes of the files 38 according to the data Da of attributes, and the second program 52 and the second file system 42 may update related attributes of the files 58 according to the data Db of attributes. When the file attribute synchronization between the first computer system 20 and the second computer system 40 is finished, corresponding files 38 and 58 would have the same attributes that are distinguishable and used by the first computer system 20 and the second computer system 40. Furthermore, the first computer system 20 may update, store and display the attributes of the files 38 under the integrated file attribute structure 30 via the first program 32 and the first file system 22. Similarly, the second computer system 40 may update, store and display the attributes of the files 58 under the integrated file attribute structure 30 via the second program 52 and the first second system 42. If the first program 32 and second program 52 are integrated with the first operating system 21 and second operating system 41 respectively in a manner of plugin or API (Application Programming Interface) injection, when the file attribute synchronization between the first computer system 20 and the second computer system 40 is finished, the first program 32 and the second program 52 may provide the data of every attribute of the files 38 and 58, which has been synchronized, to the first operating system 21 and second operating system 41 respectively via the application programming interface (API).

In some cases, the data Ua and Ub of attributes may correspond to a same file but have different values of settings, such that conflict of the attributes of the files may occur. It is assumed that the data Ua of attributes is uploaded to the server 10 before the data Ub of attributes is uploaded to the server 10. In this case, if the server 10 determines that data Ua and Ub of attributes is corresponded to a same attribute of a file but have different values, the server 10 sets the data Ua of attributes uploaded from the first computer system 20 and related files as a previous version (e.g., version 20), and sets the data Ub of attributes uploaded from the second computer system 40 and related files as a current version (e.g., version 21). Afterwards, the first computer system 20 downloads the data Ub of attributes and related files from the server 10, and renames the file extension of the conflicted files as ".conflictxx", where xx is a number. The prior art provides more details of other solutions to solve the conflicts of the data of the attributes of files, and would not be repeated herein.

In an embodiment of the present invention, the file-attribute synchronization system 100 may synchronize the files and the attributes of the files simultaneously. In the following, it would be explained how the file-attribute synchronization system 100 synchronizes the files. When the files 38 of the first computer system 20 have any modification, the first program 32 gathers the modified data of the files 38 of the first computer system 20 under the integrated file attribute structure 30, and synchronizes the gathered modified data of the files 38 of the first computer system 20 under the integrated file attribute structure 30 to the server 10. Because the modification of the attributes of the files 38 is a kind of modifications of the files 38, the modified data of the files 38 includes the data Da of attributes. The server 10 may synchronize the modified data of the files 38 of the first computer system 20 under the integrated file attribute structure 30 from the server 10 to the second computer system 40, such that the second computer system 40 may update the attributes of the files 58 of the second computer system 40 under the integrated file attribute structure 30 according to the modified data of the files 38 of the first computer system 20 under the integrated file attribute structure 30.

In addition, When the files 58 of the second computer system 40 have any modification, the second program 52 gathers the modified data of the files 58 of the second computer system 40 under the integrated file attribute structure 30, and synchronizes the gathered modified data of the files 58 of the second computer system 40 under the integrated file attribute structure 30 to the server 10. Because the modification of the attributes of the files 58 is a kind of modifications of the files 58, the modified data of the files 58 includes the data Db of attributes. The server 10 may synchronize the modified data of the files 58 of the second computer system 40 under the integrated file attribute structure 30 from the server 10 to the first computer system 20, such that the first computer system 20 may update the attributes of the files 38 of the first computer system 20 under the integrated file attribute structure 30 according to the modified data of the files 58 of the second computer system 40 under the integrated file attribute structure 30.

In an embodiment of the present invention, the attribute synchronization program 12 of the server 10 may not only synchronize the attributes of the files of the first computer system 20 and the second computer system 40, but also analyze the files 38 or 58 uploaded by the first computer system 20 or the second computer system 40 and modify the data of the attributes of the files 38 or 58 under the integrated file attribute structure 30 according to the result of analyzing the updates files 38 or 58. For example, when the attribute synchronization program 12 detects that an file 38 or 58 uploaded by the first computer system 20 or the second computer system 40 is a video file, and that the length of the video file is 30 to 60 minutes and its motion vector is less than an average value of normal video files, the attribute synchronization program 12 would automatically set the "tag" attribute of the uploaded file 38 or 58 as newsreel. Where, algorithms of Block-matching, Optical flow, or RANSAC may be used to calculate the motion vector of the uploaded video file. For another example, when the attribute synchronization program 12 detects that an file 38 or 58 uploaded by the first computer system 20 or the second computer system 40 is a picture file and that the picture file has any portrait detected by using any face detect algorithm, the attribute synchronization program 12 would automatically set the "tag" attribute of the uploaded file 38 or 58 as portrait. Where, the face detect algorithm may be Eigenface algorithm. More details about calculating the motion vector, face detecting and detecting whether the uploaded file is a video file or a picture file have been discussed in related field, thus would not be repeated herein. In the embodiment, the data of the attributes of files that is automatically updated through the analysis performed by the attribute synchronization program 12 may be synchronized to the first computer system 20 and/or to the second computer system 40 so as to update related attributes of the files 38 and/or 58. In other embodiments of the present invention, the operations of updating the files 38 or 58 according to the result of analyzing may be not only performed by the attribute synchronization program 12, but also can be performed by the first program 32 and the second program 52. In other words, before one of the files 38 is uploaded to the server 10, the first program 32 analyzes the file 38 and updates the attributes of the file 38 according to the result of analyzing. Similarly, before one of the files 58 is uploaded to the server 10, the second program 52 analyzes the file 58 and updates the attributes of the file 58 according to the result of analyzing.

In an embodiment of the present invention, the file-attribute synchronization system 100 may just synchronize the files having a specific attribute. The first program 32 and the second program 52 may respectively collect the files 38 and 58 having the same specific attribute and being stored in various directories of the first computer system 20 and the second computer system 40, and then respectively upload the collected files 38 and 58 having the same specific attribute to the server 10. In addition, the first program 32 and the second program 52 may respectively control the first computer system 20 and the second computer system 40 to download the files having the foresaid specific attribute from the server 10. For example, the files having a "work" tag may be stores in a plurality of directories of the first computer system 20 and the second computer system 40, and the first program 32 and the second program 52 may collect the files having the "work" tag and upload these collected files to the server 10. Where, the "work" tag is just an example of the specific attribute in the embodiment, and the present invention is not limited thereto. In other embodiments of the present invention, the specific attribute may be file extension, size of files, competence, or other attribute of the file. In other embodiments of the present invention, the attribute synchronization program 12 may collect the files having the same specific attribute and being stored in various directories of the server 10, and then synchronizes the collected files having the same specific attribute to the first computer system 20 and the second computer system 40 respectively. In addition, the attribute synchronization program 12 may reject any file 38 or 58 that is uploaded by the first computer system 20 or the second computer system 40 and does not have the specific attribute.

In an embodiment of the present invention, the file-attribute synchronization system 100 may store the files having different attributes to different directories according to the data of the attributes of the files. In detail, when the operations of synchronizing the files and the attributes of the files, the attribute synchronization program 12 may store an uploaded file to a directory corresponded to one of the attributes of the uploaded file. For example, the attribute synchronization program 12 may store the files respectively having "work" tag, "music" tag, "picture" tag, etc. to a "work" directory, "music" directory, "picture" directory, etc. of the server 10. For another example, the attribute synchronization program 12 may store the files respectively having file extension of Audio Video Interleave (AVI), Bitmap (BMP), etc. to a video directory, a picture directory, etc.

In an embodiment of the present invention, the attribute synchronization program 12 may further analyze one of the files 38 or 58 uploaded from the first computer system 20 or the second computer system 40 and update the attributes of the uploaded file 38 or 58 according to the result of analyzing. Then, the server 10 stores the file 38 or 58 in a corresponding directory according to one of the attributes of the file 38 or 58 after the attributes of the file 38 or 58 have been updated. The operations of updating the files 38 or 58 according to the result of analyzing may be not only performed by the attribute synchronization program 12, but also can be performed by the first program 32 and the second program 52. In an embodiment of the present invention, when a user wants to upload a file 38 or 58 to the server 10 and drags and drops the file 38 or 58 to an icon of the first program 32 or the second program 52, the first program 32 or the second program 52 is triggered to analyze the file 38 or 58. In another embodiment of the present invention, when a user wants to upload a file 38 or 58 to the server 10 and drags and drops the file 38 or 58 to a specific directory of the first computer system 20 or the second computer system 40, the first program 32 or the second program 52 is triggered to analyze the file 38 or 58.

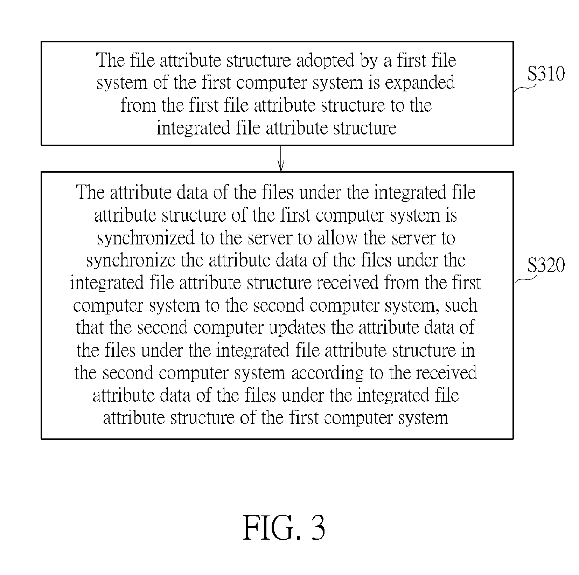

FIG. 3 is a flow chart of a method for cross-platform synchronizing attributes of files according to an embodiment of the present invention. The method is applied in the first computer system 20 and comprises the following steps:
Step S310: expanding the file attribute structure adopted by a first file system 22 of the first computer system 20 from the first file attribute structure 24 to the integrated file attribute structure 30; and
Step S320: synchronizing the data Ua of the attributes of the files 38 of the first computer system 20 under the integrated file attribute structure 30 to the server 10 to allow the server 10 to synchronize the data Ua of the attributes of the files 38 under the integrated file attribute structure 30 received from the first computer system 20 to the second computer system 40, such that the second computer 40 updates the data of attributes of the files 58 under the integrated file attribute structure 30 in the second computer system 40 according to the received data Ua of the attributes of the files 38 under the integrated file attribute structure 30 of the first computer system 20.

In an embodiment of the present invention, a non-transient computer-readable storage medium is disclosed. The non-transient computer-readable storage medium stores a computer program which contains a plurality of computer-executable instructions configured to command the server 10, the first computer system 20 and the second computer system 40 to perform the foresaid method for cross-platform synchronizing attributes of files.

In above embodiments, two computer systems are illustrated to explain the method for cross-platform synchronizing attributes of files. However, the present invention is not limited thereto. In other words, the method of the present invention may be applied in three or more computer systems for cross-platform synchronizing attributes of files of these computer systems. Referring again to FIG. 1, in an embodiment of the present invention, the file-attribute synchronization system 100 further comprises a third computer system 60. The third computer system 60 establishes a network connection with the server 10 so as to transmit and receive data to/from the server 10 through the network connection. A third operating system 61 is installed in the third computer system 60, and the third operating system 61 uses a third file system 62 to manage files 78 of the third computer system 60. Moreover, a file attribute structure of the third file system 62 is a third file attribute structure 64. Where, the third file attribute structure 64 has a plurality of attributes 65. In a condition that the third operating system 61 uses the third file system 62, each of the files 78 of the third computer system 60 has a plurality of attributes 65 of the third file attribute structure 64. In the embodiment, the plurality of attributes 65 of the third file attribute structure 64 are not all the same as the attributes 25 of the first file attribute structure 24 and/or the attributes 45 of the second file attribute structure 44. In other words, the attributes 65 of the third file attribute structure 64 and the attributes 25 of the first file attribute structure 24 and/or the attributes 45 of the second file attribute structure 44 may be partially equal (e.g. file name, file extension) and partially different (e.g. tag).

In order to make the third file system 62 be able to distinguish and use the attributes of the files 78 of the third computer system 60, the third program 72 may be installed in the third computer system 60, such that the file attribute structure of the third computer system 60 would be expanded from the third file attribute structure 64 to the integrated file attribute structure 30. The third program 72 may be integrated in a default file management program of the third operating system 61 or other third-party file management programs in a manner of plugin, API injection, or others. Moreover, the integrated file attribute structure 30 comprises not only the plurality of attributes 65 of the third file attribute structure 64 but also a plurality of extended attributes 66. Where, the attributes that are included by the first file attribute structure 24 or the second file attribute structure 44 but not included by the third file attribute structure 64 would be defined by the extended attributes 66, such that these attributes (i.e. the extended attributes 66) could be distinguished and used in the third computer system 60. Moreover, the extended attributes 66 are different from each other and different from each of the attributes 65. In other words, the attributes 65 and the extended attributes 66 included in the integrated file attribute structure 30 are not repeated. In addition, the attributes 65 and the extended attributes 66 of the integrated file attribute structure 30 may include but not limited thereto file name, file extension, limits of authority, color, tag, comment, discussion thread, category, established date, icon, etc.

When synchronization of attributes of files between the first computer system 20, the second computer system 40 and the third computer system 60 is performed, the attribute synchronization program 12 not only receives the data Ua and Ub of the attributes uploaded from the first computer system 20 and the second computer system 40, but also receives the data Ub of the attributes uploaded from the third computer system 40. The attribute synchronization program 12 synchronizes the data of the attributes of the files 38, 58 and 78 of the first computer system 20, the second computer system 40 and the third computer system 60 under the integrated file attribute structure 30 according to the data Ua, Ub and Uc of the attributes.

In detail, the attribute synchronization program 12 of the server 10 stores the uploaded data Ua, Ub and Uc of the attributes of the first computer system 20, the second computer system 40 and the third second computer system 60 in the database 14. Afterwards, when synchronizing the attributes of the files, the attribute synchronization program 12 reads data Da, Db and Dc of the attributes, which is necessary for synchronizing the attributes, and transmits the data Da, Db and Dc of the attributes to the first computer system 20, the second computer system 40 and the third computer system 60 respectively. Then, the first program 32 and the first file system 22 may update related attributes of the files 38 according to the data Da of attributes, the second program 52 and the second file system 42 may update related attributes of the files 58 according to the data Db of attributes, and the third program 72 and the third file system 62 may update related attributes of the files 78 according to the data Dc of attributes. When the file attribute synchronization among the first computer system 20, the second computer system 40 and the third computer system 60 is finished, corresponding files 38, 58 and 78 would have the same attributes that are distinguishable and used by the first computer system 20, the second computer system 40 and the third computer system 60.

Referring again to FIG. 2, a third attributes set C is a set composed of all of the attributes 65 of the third file attribute structure 64, and the third attributes set C is included in the set 200 composed of all attributes of the integrated file attribute structure 30. As shown in FIG. 2, the union of the first attributes set A, the second attributes set B and the third attributes set C is less than the set 200. However, in other embodiment of the present invention, the structure of the file attributes may be designed to let the set 200 be equal to the union of the first attributes set A, the second attributes set B and the third attributes set C.

When the third file system 62 uses the integrated file attribute structure 30 to record the attributes of each of the files 78, the attributes 65 of each file 78 belonged to the third file attribute structure 64 are recorded by the third file system 62 even if the third program 72 may not been installed. In addition, data of the extended attributes 66 of each file 78 which is not belonged to the third file attribute structure 64 may be stored in at least a third metadata file 76, a third database 74 of the third computer system 60, or in both the at least a third metadata file 76 and the third database 74. In other words, if any attribute of the files 78 is supported by the third file system 62 of the third operating system 61, the data of this attribute would not be stored in the third metadata file 76 and/or the third database 74. On the contrary, if any attribute of the files 78 is not supported by the third file system 62 of the third operating system 61, the data of the attribute would be stored in the third metadata file 76 and/or the third database 74. In other embodiments of the present invention, all of the attributes of each of the files 78 may be stored in at least a third metadata file 76 and/or the third database 74.

In summary, based on the method for cross-platform synchronizing attributes of files of the present invention, not only the "tag" function and information thereof in OS X Mavericks® operating system may be transferred to other operating systems, but also a function of cross-platform synchronizing attributes of files may be achieved.

## Claims

1. A method for cross-platform synchronizing attributes of files, the method **characterized by**:
expanding a first file attribute structure adopted by a first file system of a first computer system to an integrated file attribute structure; and
synchronizing data of attributes of files of the first computer system under the integrated file attribute structure to a server to allow the server to synchronize the data of the attributes of the files of the first computer system under the integrated file attribute structure to a second computer system, such that the second computer system updates data of attributes of files of the second computer system under a second file attribute structure according to the received data of the attributes of the files of the first computer system under the integrated file attribute structure.

2. The method of claim 1, further **characterized by** including a second attribute set composed of all attributes of the second file attribute structure in a set composed of all attributes of the integrated file attribute structure.

3. The method of any of claims 1-2, further **characterized in that** all attributes of the first file attribute structure are not all the same as all attributes of the second file attribute structure.

4. The method of any of claims 1-3, further **characterized in that** when the data of the attributes of the files of the second computer system under the second file attribute structure is modified, the second computer system synchronizes the modified data of the attributes of the files under the second file attribute structure to the server, and the method further comprises:
receiving the modified data of the attributes of the files of the second computer system under the second file attribute structure from the server; and
updating the data of the attributes of the files of the first computer system under the integrated file attribute structure according to the modified data of the attributes of the files of the second computer system under the second file attribute structure.

5. The method of any of claims 1-4, further **characterized by** a program installed in the first computer system expanding a file attribute structure of the first computer system from the first file attribute structure to the integrated file attribute structure.

6. The method of claim 5 further **characterized by** performing operations of modifying, storing and displaying the data of attributes of the files of the first computer system under the integrated file attribute structure by using the program and the first file system.

7. The method of any of claims 1-4, further **characterized by** another program installed in the second computer system expanding a file attribute structure of the second computer system from the second file attribute structure to the integrated file attribute structure.

8. The method of claim 7, further **characterized in that** when the data of the attributes of the files of the second computer system under the integrated file attribute structure is modified, the second computer system synchronizes the modified data of the attributes of the files under the integrated file attribute structure to the server, and the method further comprises:
receiving the modified data of the attributes of the files of the second computer system under the integrated file attribute structure from the server; and
updating the data of the attributes of the files of the first computer system under the integrated file attribute structure according to the modified data of the attributes of the files of the second computer system under the integrated file attribute structure.

9. The method of claim 7, further **characterized by** synchronizing modified data of the attributes of the files of the first computer system under the integrated file attribute structure to the server to allow the server to synchronize the modified data of the attributes of the files of the first computer system under the integrated file attribute structure to the second computer system, such that the second computer system updates the data of the attributes of the files of the second computer system under the integrated file attribute structure according to the received modified data of the attributes of the files of the first computer system under the integrated file attribute structure.

10. The method of any of claims 1-9, further **characterized by** analyzing a file of the first computer system, and modifying data of attributes of the file under the integrated file attribute structure according to a result of analyzing the file.

11. The method of any of claims 1-10, further **characterized by** selectively synchronizing the files of the first computer system to the server according to the data of the attributes of the files of the first computer system under the integrated file attribute structure.

12. The method of any of claims 1-11, further **characterized by** the server analyzing a file uploaded by the first computer system or the second computer system, modifying data of attributes of the uploaded file under the integrated file attribute structure according to a result of analyzing the uploaded file, and synchronizing the modified data of the attributes of the uploaded file to the first computer system and the second computer system.

13. The method of any of claims 1-12, further **characterized by** the server receiving a file from the first computer system and storing an attribute of the file in a corresponding directory according to the attribute of the file.

14. The method of any of claims 1-13, further **characterized by** storing data of attributes of the first computer system under the integrated file attribute structure not belonged to the first file attribute structure in a metadata file or a database.

15. A non-transient computer-readable storage medium, wherein the storage medium stores a computer program containing a plurality of computer-executable instructions configured to command a computer system to perform the method of any of claims 1-14.
